**Europäisches Patentamt**

**European Patent Office**

**Office européen des brevets**

(11) Veröffentlichungsnummer: **0 446 482 A1**

# (12) EUROPÄISCHE PATENTANMELDUNG

(21) Anmeldenummer: 90125387.2

(22) Anmeldetag: 22.12.90

(51) Int. Cl.⁵: **B41M 5/24**, G09F 3/00

(30) Priorität: 16.03.90 DE 4008398

(43) Veröffentlichungstag der Anmeldung:
18.09.91 Patentblatt 91/38

(84) Benannte Vertragsstaaten:
**DE FR GB**

(71) Anmelder: **MESSER GRIESHEIM GMBH**
**Hanauer Landstrasse 330**
**W-6000 Frankfurt/Main(DE)**

(72) Erfinder: **Gast, Robert**
**Martin-Heidegger-Strasse 7**
**W-8000 München 60(DE)**
Erfinder: **Müller, Alfred, Dr.**
**Innsbrucker Strasse 63**
**W-8038 Gröbenzell(DE)**
Erfinder: **Rappat, Franz Josef**
**Elsterstrasse 21**
**W-8031 Eichenau(DE)**
Erfinder: **Sandtner, Reinhold**
**Kiefernstrasse 19 A**
**W-8000 München 90(DE)**

(54) **Verfahren zum Beschriften oder Markieren.**

(57) Die Erfindung betrifft ein Verfahren zum Beschriften oder Markieren von Flächen mit einem Elektronen- oder Laserstrahl.

Um ein Verfahren zum Beschriften oder Markieren zu schaffen, das es im Vergleich zu bisher durchgeführten Verfahren ermöglicht, das Beschriften oder Markieren schneller und mit verringertem Steuerungsaufwand durchzuführen, erfolgt die Beschriftung oder Markierung unter mehrfachem Nachführen des Elektronen- oder Laserstrahles mit einer Energieeinbringung entlang der Linie des darzustellenden Zeichens, welche beim einmaligen Nachführen keine optische sichtbare Veränderung auf der Fläche bewirkt.

EP 0 446 482 A1

Die Erfindung betrifft ein Verfahren zum Beschriften oder Markieren nach dem Oberbegriff des Anspruches 1.

An Elektronen- oder Lasermaschinen kann der Strahl bei geeigneter Leistungs-, Fokus- und Ablenksteuerung und/oder Bewegungssteuerung auch zum Beschriften oder Markieren von Zeichen (Buchstaben, Ziffern, Firmenlogo's u. ä.) verwendet werden.

Grundsätzlich ist dieses Verfahren bei Elektronenstrahlmaschinen bekannt. Es wird seit längerem realisiert, z. B. unter zusätzlicher Verwendung einer CNC-Steuerung, die den Strahl und/oder das Werkstück entsprechend steuert.

Da viele Elektronenstrahlmaschinen eigentlich für die Schweißaufgabe nur die Maschinen-Ablaufsteuerung, z. B. eine speicherprogrammierbare Steuerung (SPS), aber keine CNC-Steuerung benötigen, entstehen dann für den Zusatz "Beschriften oder Markieren" hohe Zusatzkosten. Statt der CNC-Steuerung könnte auch eine zusätzliche spezielle "Beschriftungs- oder Markierungssteuerung" verwendet werden, die ebenfalls hohe Kosten verursacht.

Hinzu kommt, daß bei Verwendung einer CNC-Steuerung der Beschriftungs- oder Markierungsvorgang meist sehr lange dauert (je nach Zeichenzahl mehrere Sekunden, je nach Zeichengröße ca. 1 Sekunde pro Zeichen).

Ein weiterer wesentlicher Nachteil ist, daß der Strahl zwischen den Zeichen ausgeschaltet werden muß, damit zwischen den Zeichen kein beschrifteter oder markierter Strich entsteht. Dadurch entstehen Zeitverlust und/oder Steuerungsprobleme.

Der Erfindung liegt daher die Aufgabe zugrunde, ein Verfahren zum Beschriften oder Markieren zu schaffen, das es im Vergleich zu bisher durchgeführten Verfahren ermöglicht, das Beschriften oder Markieren schneller und mit verringertem Steuerungsaufwand durchzuführen.

Diese Aufgabe wird erfindungsgemäß gelöst mit den im kennzeichnenden Teil des Hauptanspruches angegebenen Merkmalen.

Vorteilhafte Weiterbildungen der Erfindung sind in den Unteransprüchen angegeben.

Vorteilhaft werden für das Beschriften oder Markieren nach der Erfindung nur die für die Maschinensteuerung ohnehin vorhandene SPS- Steuerung und ein an Elektronenstrahlmaschinen vorhandener Funktionsgenerator (Pendelgenerator) zur Beeinflussung der Strahlablenkung verwendet. Dadurch entstehen keine Zusatzkosten.

Durch die Erfindung kann der Beschriftungs- oder Markierungsvorgang wesentlich schneller durchgeführt werden und es muß zwischen den Zeichen keine Strahlsteuerung vorgenommen werden.

Durch das Verfahren nach der Erfindung werden keine Zeichen fest in einem Speicher abgelegt; dadurch kann der Speicherbedarf verringert werden. Es ist auch leicht möglich, "beliebige" Zeichen zu erzeugen, da diese aus Segmenten gebildet werden, die im Speicher abgelegt sind. Es ermöglicht auch sehr einfach, die Zeichengröße zu variieren.

Aufgrund des erfindungsgemäßen Verfahrens ist die Beschriftungs- bzw. Markiergeschwindigkeit unabhängig von der Schriftgröße. Ein einfaches Optimieren der Schreibqualität kann über das Beeinflussen der Wedelfrequenz erfolgen, durch die das Schmelzverhalten des Werkstoffes gesteuert wird. Eine Vektorisierungseinrichtung (z. B. Vektorisierung der Strahlwedelung) erlaubt ein einfaches Drehen von Zeichen und Schriften.

Die Beschriftung oder Markierung kann durch Eingabe über Tastatur, Programm, automatisches Hochzählen pro Schweißung, Eingabe über Schnittstelle von externem Rechner eingegeben werden und aus mehreren Zeichen bestehen, z. B. Werkstück-Nummer, Datum, Schweißnahtnummer, Bohrstellenmarkierung. Ebenso können Position, Größe usw. der Beschriftung oder Markierung eingegeben werden.

Für die Zeichenerzeugung werden Segmente, vorzugsweise gerade oder gebogene Linien, verwendet, wobei die Segmentanzahl nicht festgelegt oder begrenzt ist.

Die einzelnen Segmente werden von einem Funktionsgenerator durch Verwenden von Standardfunktionen erzeugt.

Beispiel für Erzeugung eines Segmentes:

Segment =

die dazugehörige Standardfunktion
des Funktionsgenerators z. B.

Ablenkung

Fig. 1                                                    Zeitachse

Es sind auch andere Funktionen möglich, wie z. B. Sinus, Cosinus, Rechteck.

Das Segment wird dadurch erzeugt, daß die Ablenkfunktion mit einer bestimmten Frequenz eine vorgegebene Zeit (n-Perioden) den EB-Strahl oder Laserstrahl oszillierend auf das Werkstück einwirken läßt.

Durch dieses mehrfache "Überschreiben" einer Linie läßt sich besonders günstig die "Schreibqualität" optimieren.

Die Strichausführung (Aussehen des Striches) hängt vom Material, von Strahlleistung, Fokussierung, Frequenz und Einwirkdauer ab.

Beispiel für die Erzeugung einer Zahl:

Fig. 2

2

4      1

5          6

3          Zeichenmittelpunkt

Referenzpunkt

Die einzelnen Segmente werden wie vorher beschrieben erzeugt, horizontale und senkrechte Segmente durch Auswahl der entsprechenden Funktionen auf dem entsprechenden Ablenkkanal x oder y

Eingabe → SPS

Funktionswahl

x und/oder y-
Richtung

Pendelamplitude

Frequenz

DC-Offset xy
(Amplitude)

Funktionsgenerator

Ablenkung x

Ablenkung y

Ablenksystem

Fig. 3

3

Alle Daten werden von der SPS vorgegeben. Das sind:
- Mittelpunktskoordinaten ( = DC-Offset) des jeweiligen Segmentes
- Pendelamplitude
- Pendelrichtung

Diese Werte können von Segment zu Segment unterschiedlich sein. Alle anderen Werte liegen fest.

Auch können durch Festlegung der Vorgabewerte sehr einfach optisch günstige Übergänge zwischen den Segmenten oder Teilen der Zeichen erzeugt werden (siehe z. B. Lücken zwischen den Segmenten, Fig. 2).

Um die Beschriftungs- oder Markierungsgeschwindigkeit möglichst schnell zu machen, liegen alle relevanten Daten vorberechnet in der SPS vor, das sind:
Reihenfolge der Segmente, Koordinaten (DC-Offset) der Segmente, Amplituden, Frequenz und Funktion.

Zur Vereinfachung des Programmes und zur Speicherplatzreduzierung können die Zeichen symmetrisch, z. B. Mittelpunkt im Segment 1 aufgebaut werden.

Beispielskizze

Ansteuern der
Funktion mit Amplitude

mit Amplitude
Fig. 4

$Y$

$+ 1$

$X$

$- 1$

In der hier angewandten Technik liegt auch der Grund, warum von Zeichen zu Zeichen der Strahl nicht abgeschaltet oder der Fokus verändert werden muß. Und zwar deshalb, da mit der Ablenkung fast trägheitslos (realisiert eine minimale Zeit von 1 bis 2 μsec) von einem Segment zum nächsten gesprungen werden kann und deshalb keine sichtbare Spur zurückbleibt. Dagegen sind die Zeiten zum Strahlaus-/einschalten um 10er-Potenzen größer.

Ein weiterer Grund dafür, daß keine sichtbare Spur zurückbleibt, ist, daß mit verhältnismäßig kleiner Energieeinwirkung (Strahlleistung) auf der Fläche beschriftet oder markiert wird. Damit trotzdem die zu beschriftende oder markierende Linie sichtbar wird, wird mit dieser kleinen Leistung "oft" auf der Linie hin- und heroszilliert (siehe Fig. 1).

Mit diesem Verfahren ist es somit möglich (je nach Parametereinstellung) z. B. eine 10stellige Ziffer bei einer mittleren Segmentzahl von 5 Segmenten pro Ziffer in einer Zeit von weit weniger als 1 Sekunde bis minimal ca. 50 ms zu beschriften.

Vorstehend wurde eine Grundausführung zum Beschriften oder Markieren einer Zeichenfolge beschrieben. Diese Grundausführung läßt sich erweitern.

Beschriften oder Markieren im Kreis

Beispiel:                                                    Beschriftung

r

Fläche bzw.
Werkstück

Fig. 5

Für das Beschriften oder Markieren einer Zeichenfolge auf einem Kreissegment, ist als Zusatz eine "Vektorisierungseinrichtung" nötig, die im Funktionsgenerator integriert sein kann.

Funktionswahl

x und/oder y - Richtung

Pendelamplitude

Frequenz

DC-Offset x,y

Eingabe

SPS

Funktionsgenerator

$\chi \rho$

Vektorisierung

x'

y'

Fig. 6

Dabei sind die Signale x' und y' nach folgender Beziehung
ermittelt: $x' = x \cdot \cos\rho + y \cdot \sin\rho$
$y' = -x \cdot \sin\rho + y \cdot \cos\rho$
Mit x' und y' werden gedrehte Segmente und Zeichen
erzeugt

y

x

Originalzeichen

y

y'

x

ρ

x'

gedrehtes Zeichen

Fig. 7

Ist die Zeichenmitte im Mittelpunkt des Strahlablenksystemes, so werden durch diese Transformation
nur die Segmente und Zeichen gedreht.

Werden zu den Koordinaten des Zeichens noch die Mittelpunktskoordinaten (die Mittelpunktskoordinaten sind vorteilhafte Koordinaten für die Positionierung des Zeichens auf dem Werkstück, allerdings kann
statt des Mittelpunktes jeder andere Bezugspunkt gewählt werden) des Zeichens dazu addiert, so wird
durch diese Transformation das ganze Zeichen um den Winkel ρ auf einem Kreis mit Radius r weitergedreht.

Referenzpunkt

xDC  yDC

Segment 1

xDC und yDC für die Lage des
Segmentes 1

Dann ist für den Mittelpunkt
des Segmentes 1

$y = r + yDC$
$x = xDC$

Bei einer Transformation um den
Winkel $\int$ wird dann das Zeichen in
der dargestellten Weise beschriftet
oder markiert.

r

$\int$

y

x

Fig. 8

Für den Fall, daß die Mitte des Ablenksystemes und die Mitte des Werkstückes nicht zusammenfallen oder eine exzentrische Lage der Beschriftung oder Markierung auf dem Werkstück nötig ist, sind rechnerische Korrekturen für die Koordinatenwerte einfach in der SPS durchzuführen.

Weitere Möglichkeiten, z. B. um lange Zeichenfolgen zu beschriften oder markieren, die mit der Ablenkung alleine nicht mehr beschrift- oder markierbar sind, oder um Kennzeichen auf ein kontinuierlich durch die Schweißmaschine laufendes Werkstück aufzubringen, können mit dem erfindungsgemäßen Verfahren einfach realisiert werden.

Funktionswahl

x und/oder y - Richtung

Pendelamplitude

Funktionsgenerator

Eingabe | SPS

Frequenz

DC-Offset x,y

Integrator

Werkstückgeschwindigkeit

Fig. 9

Um fliegend beschriften oder markieren zu können, wird die Geschwindigkeitsinformation (Werkstückbewegung) über einen Integrator in eine überlagerte DC-Ablenkung umgewandelt. Bei einem neuen Zeichen wird der Integrator zurückgesetzt und für den Neustart freigegeben.

Das Beschriftungs- oder Markierungsprogramm kann einerseits mit fixen Größen ausgestattet sein oder sehr flexibel variierbar sein.

Variable Parameter sind:
- Schriftgröße
- Radius beim Beschriften oder Markieren auf Kreissegment
- Position der Beschriftung oder Markierung auf Werkstück

Bei Werkstückzählung, z. B.
- Anfangszählwert
- Bedienerkennzeichen
- Text
- Ziffern allgemeiner Art

**Patentansprüche**

1. Verfahren zum Beschriften oder Markieren von Flächen mit einem Elektronen- oder Laserstrahl,
   dadurch gekennzeichnet,
   daß die Beschriftung oder Markierung unter mehrfachem Nachführen des Elektronen- oder Laserstrahles mit einer Energieeinbringung entlang der Linie des darzustellenden Zeichens erfolgt, welche beim einmaligen Nachführen keine optisch sichtbare Veränderung auf der Fläche bewirkt.

2. Verfahren nach Anspruch 1,
   dadurch gekennzeichnet,
   daß jedes Zeichen aus einer Anzahl von Zeichensegmenten zusammengesetzt wird und unter oszillierendem Einwirken der Elektronen- oder Laserstrahlenergie auf die Zeichensegmente erzeugt wird.

3. Verfahren nach Anspruch 1 oder 2,
   dadurch gekennzeichnet,
   daß die Einwirkung der Elektronen- oder Laserstrahlenergie unter Vorgabe der Mittelpunktskoordinaten, der Zeichensegmente, der Pendelamplituden, der Pendelrichtungen, der Frequenz und der Ablenkfunktionen von einer Elektronenstrahl- oder Laser-Steuerung an einen Funktionsgenerator erzeugt wird, der in Abhängigkeit von den vorgegebenen Werten und der Wahl der Ablenkfunktion ein Ablenksystem steuert, welches den Elektronen- oder Laserstrahl um den Mittelpunkt des Zeichensegmentes oszilliert.

4. Verfahren nach einem der Ansprüche 1 bis 3,
   dadurch gekennzeichnet,
   daß die Mittelpunktskoordinaten der Zeichensegmente eines Zeichens auf eine Referenzpunktkoordinate bezogen werden, die die Lage des Zeichens bezogen auf die Mitte des Ablenksystemes definiert.

5. Verfahren nach einem der Ansprüche 1 bis 4,
   dadurch gekennzeichnet,
   daß die Zeichensegmente vektoriell gedreht werden.

6. Verfahren nach einem der Ansprüche 1 bis 5,
   dadurch gekennzeichnet,
   daß die vektoriell gedrehten Zeichen um einen Winkel transformiert werden.

7. Verfahren nach einem der Ansprüche 1 bis 6,
   dadurch gekennzeichnet,
   daß der Elektronen- oder Laserstrahl unter einmaligem Einbringen der Elektronen- oder Laserstrahlenergie auf die Fläche zwischen den Zeichensegmenten bzw. Zeichen von einem Zeichensegment zum Nächsten bzw. von einem Zeichen zum Nächsten abgelenkt wird.

8. Verfahren nach einem der Ansprüche 1 bis 7,
   dadurch gekennzeichnet,
   daß die Fläche relativ zur Strahlablenkung bewegt wird und die Strahlablenkung um den Betrag der Bewegung verändert wird.

9. Einrichtung zur Durchführung des Verfahrens,
dadurch gekennzeichnet,
daß eine speicherprogrammierbare Steuerung über einen Funktionsgenerator mit einem Ablenksystem verbunden ist.

10. Einrichtung nach Anspruch 9,
dadurch gekennzeichnet,
daß dem Funktionsgenerator eine Vektorisierung und/oder ein Integrator zugeordnet ist.

Europäisches
Patentamt

**EUROPÄISCHER
RECHERCHENBERICHT**

Nummer der Anmeldung

**EP 90 12 5387**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | US-A-3 657 085 (D.HOFFMEISTER ET AL.)<br>* das ganze Dokument *<br>– – – | 1,2-10 | B 41 M 5/24<br>G 09 F 3/00 |
| X,Y | DE-C-3 728 622 (DAIMLER-BENZ AG)<br>* das ganze Dokument *<br>– – – | 1,2-10 | |
| Y | DE-A-2 335 517 (SIEMENS AG)<br>* das ganze Dokument *<br>– – – | 1-10 | |
| Y | PATENT ABSTRACTS OF JAPAN vol. 11, no. 21 (M-555)(2468) 21 Januar 1987,<br>& JP-A-61 195893 (HITACHI ZOSEN CORPORATION) 30 August 1986,<br>* das ganze Dokument *<br>– – – | 1-10 | |
| A | EP-A-0 054 840 (LAZARE KAPLAN AND SONS, INCOR-PORATED)<br>* das ganze Dokument *<br>– – – – – | 1-10 | |

| | RECHERCHIERTE SACHGEBIETE (Int. Cl.5) |
|---|---|
| | B 41 M<br>G 09 F<br>H 01 J<br>B 23 K |

Der vorliegende Recherchenbericht wurde für alle Patentansprüche erstellt

| Recherchenort | Abschlußdatum der Recherche | Prüfer |
|---|---|---|
| Den Haag | 24 April 91 | BACON,A.J. |